(19) **Europäisches Patentamt / European Patent Office / Office européen des brevets**

(11) **EP 2 177 558 B1**

(12) **EUROPEAN PATENT SPECIFICATION**

(45) Date of publication and mention of the grant of the patent:
**28.09.2016 Bulletin 2016/39**

(21) Application number: **09252437.0**

(22) Date of filing: **16.10.2009**

(51) Int Cl.:
*C08J 7/18* (2006.01)     *H01L 31/042* (2006.01)

(54) **Polymer microstructure with tilted micropillar array and method of fabricating the same**

Polymermikrostruktur mit geneigtem Mikrostützen-Array und Herstellungsverfahren dafür

Microstructure polymère dotée d'un réseau de micropiliers inclinés et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.10.2008 KR 20080101580**

(43) Date of publication of application:
**21.04.2010 Bulletin 2010/16**

(73) Proprietor: **KOREA INSTITUTE OF SCIENCE AND TECHNOLOGY**
**Seongbuk-gu**
**Seoul (KR)**

(72) Inventors:
• **Moon, Myoung-Woon**
  **Seongbuk-gu, Seoul (KR)**
• **Lee, Kwang Ryeol**
  **Seocho-gu, Seoul (KR)**
• **Kim, Ho-Young**
  **Gwanak-gu, Seoul (KR)**
• **Cha, Tae-Gon**
  **Gangnam-gu, Seoul (KR)**

(74) Representative: **advotec.**
**Patent- und Rechtsanwälte**
**Widenmayerstrasse 4**
**80538 München (DE)**

(56) References cited:
**WO-A2-2009/135078**

• **SHRAVANDI REDDY, EDUARD ARZT, ARANZAZU DEL CAMPO: "Nioinspired Surfaces with Switchable Adhesion" ADVANCED MATERIALS, vol. 19, no. 22, 2007, pages 3833-3837, XP002563068 DOI: 10.1002/adma.200700733**
• **CHANDRA DINESH ET AL: "Biomimetic Ultrathin Whitening by Capillary-Force-Induced Random Clustering of Hydrogel Micropillar Arrays" ACS APPLIED MATERIALS & INTERFACES,, vol. 1, no. 8, 7 October 2009 (2009-10-07) , pages 1698-1704, XP009127957**

## Description

The present invention relates to a polymer microstructure. In particular, the present invention relates to a polymer microstructure with a tilted micropillar array formed by adjusting an incident angle for ion beam treatment, and a method of fabricating the same.

As well known in the art, there have been studies on the life in the natural world and natural phenomenon. In recent years, there are observations of hydrophobicity on pure water where a lotus blossom, a lizard, a water strider, or the like appears, and there are active studies on the structures concerned.

That is, a lizard or insect goes up and down the wall or slope, or a water strider walks on the water, so the sole structure of the lizard, insect, or water strider is attracting intention. The existing studies have found that a lizard, an insect, or a water strider has a multilayer ciliated sole structure, and this structure has a hydrophobic property and sufficient adhesion to the wall.

In this structure, it is important to structurally control the adhesion strength such that a lizard or insect can walk the wall or ceiling without falling. That is, the ciliated sole structure of the insect or lizard arbitrarily is configured such that adhesion is maintained or weakened as occasion demands. In particular, there are many studies on the ciliated sole structure of the lizard. The existing studies have evaluated adhesion between linear micropillar structures and the surface, on which the micropillar structures are supported.

In the ciliated sole structure of the lizard, the cilla are tilted in a predetermined direction, not linear, so it is necessary to form a nanostructure with an asymmetric tilted structure. In recent years, as described in S. Reddy et al, Advanced Materials 19(2007) 3833-3837, linear pillars are tilted by using a shape memory polymer material. In this case, however, a polymer is a hard shape memory polymer, so the polymer is only bent by a relatively small amount. As a result, it is difficult to form a nanostructure with an asymmetric tilted structure.

Shravanthi Reddy, Eduard Arzt, Aránzazu del Campo: "Bioinspired Surfaces with Switchable Adhesion" discloses a micropillar array in which individual pillars are tilted at a certain angle. The pillars are tilted by first heating them and then physically contacting them with a glass slide to deform the pillars in a given direction.

In view of the above, the invention provides a polymer microstructure with a tilted micropillar array is formed, and a method of fabricating the same.

An aspect of the invention provides a polymer microstructure with a tilted micropillar array. The polymer microstructure is made of a soft polymer material with a micropillar array. The tilted micropillar array is formed by either thin film coating or sputtering of a metal/non-metal material while adjusting an incident angle for ion beam treatment over the entire top surface of the micropillar array. A portion of the entire top surface whereon the ion beam has been directly irradiated has wrinkles generated due to compressive stress caused by the ion beam.

Another aspect of the invention provides a method of fabricating a polymer microstructure with a tilted micropillar array. The method includes the steps of forming a soft polymer sample with a linear micropillar array, fixing the soft polymer sample onto a jig having a predetermined tilt angle within a chamber, and performing ion beam treatment on the top surface of the linear micropillar array so as to form the tilted micropillar array.

According to the aspects of the invention, the tilted micropillar array is formed by adjusting the incident angle for ion beam treatment, so the present invention can be applied in fabricating an adhesive material with dry self-cleaning, a micro robot which can goes up the wall, a wafer aligner for a semiconductor manufacturing line, and the like.

According to the aspects of the present invention, the tilted micropillar array can be formed on the surface of the polymer by the ion beam treatment where a plasma ionization rate is increased by the PECVD (Plasma-Enhanced Chemical Vapor Deposition) method with low energy consumption. Further, the micropillars can be tilted at a desired angle by adjusting at least one of the incident angle, the irradiation time, and the magnitude of acceleration voltage of the ion beam for the ion beam treatment.

According to the aspects of the present invention, with the lithography method, the low vacuum condition, and the low bias voltage condition, the substrate can be prevented from being damaged.

The above and other features of the present invention will become apparent from the following description of an embodiment given in conjunction with the accompanying drawings, in which:

> Fig. 1A is a schematic view of ion beam treatment on an upright micropillar array of a polymer microstructure according to an embodiment of the invention;
>
> Fig. 1B shows an SEM image of the surface of a tilted micropillar array according to the embodiment of the invention;
>
> Fig. 2A is a schematic view of a hybrid ion beam deposition apparatus for ion beam treatment on a micropillar array according to the embodiment of the invention;
>
> Fig. 2B is a diagram showing the shape of a jig disposed within a hybrid ion beam deposition apparatus and the surface of PDMS, which is a polymer material with a micropillar array, placed at a predetermined tilt angle ($\alpha$) on the jig according to the embodiment of the invention;
>
> Figs. 3A and 3B show SEM images of an upright linear micropillar array and a tilted micropillar array, respectively;
>
> Fig. 3C shows a schematic view illustrating that ion beams are irradiated on the surface of an upright linear micropillar;

Fig. 3D shows a schematic view illustrating that the surface of the upright linear micropillar shown in Fig. 3C directly influenced by the ion beams undergoes stress more than the opposing surface of the upright linear micropillar, causing compressive stress;

Fig. 4A shows an SEM image of a linear micropillar array before ion beam treatment is performed;

Fig. 4B shows an SEM image of a tilted micropillar array, which is formed with an incident angle for ion beam treatment tilted at $\alpha$=20°, according to the embodiment of the invention;

Fig. 4C shows an SEM image of a tilted micropillar array, which is formed with an incident angle for ion beam treatment tilted at $\alpha$=40°, according to the embodiment of the invention;

Figs. 5A and 5B show SEM images where wrinkles are observed in a portion, in which no micropillar array is formed, due to a change in voltage according to the embodiment of the invention;

Fig. 5C is a graph showing a wrinkle wavelength according to the embodiment of the invention;

Fig. 6A is a graph showing a change in wavelength to an irradiation time when a bias voltage is constant at -400 V, according to the embodiment of the invention;

Fig. 6B is a graph showing a change in amplitude to an irradiation time according to the embodiment of the invention;

Fig. 7A is a graph showing a tilt angle of a micropillar to an angle between a micropillar array and an ion beam for ion beam treatment according to the embodiment of the invention;

Fig. 7B shows an SEM image of a micropillar tilted at $\alpha$=40° according to the embodiment of the invention; and

Fig. 7C shows an SEM image of a micropillar tilted at $\alpha$=80° according to the embodiment of the invention.

The operation principle of the invention will now be described in detail with reference to the accompanying drawings. In the following description, detailed description of known functions and structures incorporated herein will be omitted when it may make the subject matter of the present invention unclear.

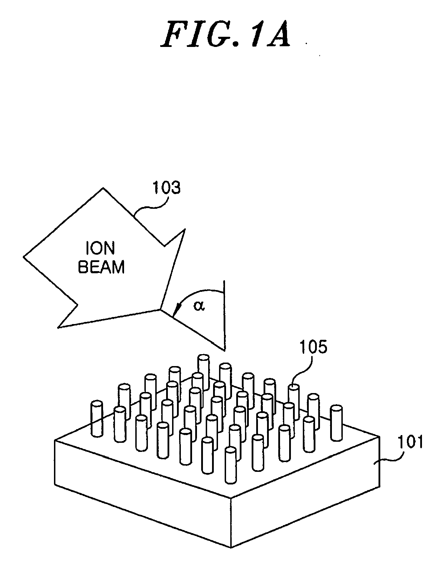

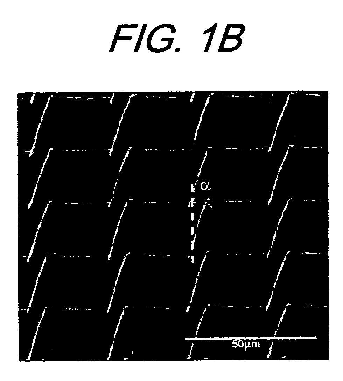

Fig. 1A is a schematic view of ion beam treatment on an upright micropillar array of a polymer microstructure according to an embodiment of the present invention. Fig. 1B shows an SEM (Scanning Electron Microscopy) image of the surface of a tilted micropillar array according to the embodiment of the present invention.

Referring to Figs. 1A and 1B, an array of linear micropillars 105 (for example, one of pillar, dots, holes, and walls having a convex shape) is formed on the surface of PDMS 101, which is a soft polymer material, under the high vacuum condition, and ion beams 103 are obliquely irradiated from an ion beam deposition apparatus onto the entire top surface of the micropillar array 105 by any one of PECVD, PSII (plasma source ion implantation), filtered vacuum arc, atmospheric plasma treatment method and ion beam method. Thus, the micropillar array on the surface of the PDMS 101 is changed into a tilted micropillar array.

The incident angle is an angle between the acceleration direction of the ion beams and the polymer material. The dedicated ion beam, one of argon gas, oxygen, $N_2$ (nitrogen), Xe (xenon), He (helium) and $CF_4$ (tetrafluoromethane) is plasmatized or ionized. The micropillar array 105 can be tilted by using one of a method using an ion beam, a thin film coating method, and a sputtering method of a metal/non-metal material, other than a method using a plasma ion. That is, the ion beams 103 are obliquely irradiated from the ion beam deposition apparatus in a predetermined direction so as to tilt the micropillar array in the predetermined direction.

The micropillar array 105 is tilted by adjusting at least one of the incident angle, the irradiation time, and the magnitude of the acceleration voltage when the ion beams are irradiated from the ion beam deposition apparatus. Further, the sectional asymmetry of the tilted micropillar array 105 may be adjusted by adjusting the irradiation time of the ion beams 103 from the ion beam deposition apparatus.

The tilted micropillar array 105 is formed on the surface of the PDMS 101, which is widely used in the bio application field as a polymer material, on the conditions that the pressure in the chamber for ion beam treatment is in the range of $1.0 \times 10^{-7}$ Pa to $2.75 \times 10^{-3}$ Pa, and the magnitude of the acceleration voltage of the ion beam for the ion beam treatment is in the range of 100 V to 100.0 kV, and the incident angle of the ion beam for ion beam treatment is equal to or more than 0° and equal to or less than 90°.

The soft polymer material with a micropillar array includes any one of polycarbonate (PC), polyimide (PI), polyethylene (PE), poly methyl methacrylate (PMMA), polystyrene (PS), poly lactic-co-glycolic acid (PLGA), hydrogel, polyethylene terephthalate (PET) and silicone rubber, other than the PDMS 101.

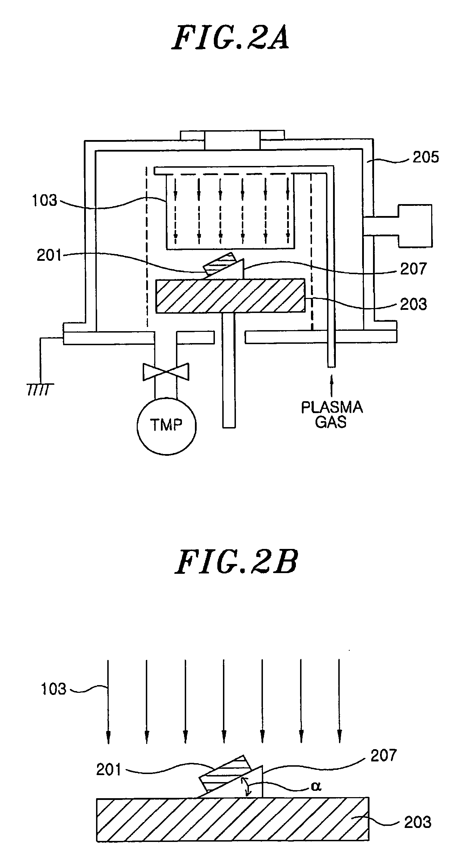

Fig. 2A is a schematic view of a hybrid ion beam deposition apparatus for ion beam treatment on a micropillar array according to the embodiment of the present invention.

Fig. 2B is a diagram showing the shape of a jig disposed within the hybrid ion beam deposition apparatus and the surface of a PDMS sample, which is a polymer material with a micropillar array, placed at a predetermined tilt angle ($\alpha$) on the jig according to the embodiment of the present invention.

A process for fabricating the PDMS sample, which is a polymer material with a tilted micropillar array, will be described with reference to Figs. 2A and 2B.

A PDMS solution in which PDMS and a PDMS curing agent are mixed with a mass ratio of 10:1 is poured on a pre-patterned silicon wafer, which is pre-patterned by photoresist (hereinafter, referred to PR). Here, the pre-patterned silicon wafer is fabricated as follows. First, SU-8, which is a negative PR material, is deposited on a silicon wafer and spin-coated at a predetermined thickness (for example, 30 $\mu$m). The PR-deposited silicon wafer is placed on a hot plate and heated in two steps at a predetermined temperature (for example, in the range of 60°C to 90°C). A chromium (Cr) mask is placed on the silicon wafer, and the silicon wafer with the mask is aligned by EVG 6200 Mask Aligner. The silicon wafer is then exposed to ultraviolet rays, and the silicon wafer is heated again in two steps at a predetermined temperature (for example, in the range of 60°C to 90°C). Thereafter, the silicon wafer is developed, cleaned by isopropyl alcohol (IPA) and dried. Thus, the pre-patterned silicon wafer is fabricated.

Thereafter, the pre-patterned silicon wafer, on which the PDMS solution is poured, is placed in a vacuum chamber 205 shown in Fig. 2A, and the vacuum state is maintained for a predetermined time (for example, 15 minutes) so as to remove bubbles in the PDMS solution.

After removing the bubbles in the PDMS solution, the pre-patterned silicon wafer with the PDMS solution thereon is placed on an optical table for a predetermined time (for example, 15 minutes) and the pre-patterned silicon wafer is then put in the horizontal state so as to make the surface of the PDMS solution smooth.

Next, the pre-patterned silicon wafer in the horizontal state is heated on the hot plate at a predetermined temperature (for example, 75°C) for a predetermined time (for example, 75 minutes) so as to solidify the PDMS solution on the pre-patterned silicon wafer.

Next, the solidified PDMS solution on the pre-patterned silicon wafer 210 is cooled at the room temperature for a predetermined time (for example, 5 minutes) and then removed from the pre-patterned silicon wafer. Thus, a PDMS sample 201, which is a polymer material with a linear micropillar array as shown in Fig. 1A, is fabricated. The micropillar array includes 64 square pattern spaces having the horizontal and vertical lengths of 4 mm, in which four groups of 16 patterns are respectively formed. The micropillar array has a width in the range of 1 nm to 10 mm and a length in the range of 1 nm to 10 mm. For example, the first group has arranged pillars having a diameter of 10 $\mu$m at intervals of 10 $\mu$m, the second group has arranged pillars having a diameter of 10 $\mu$m at intervals of 20 $\mu$m, the third group has arranged walls having a thickness of 10 $\mu$m and a length 4 mm at intervals of 20 $\mu$m, and the fourth group has arranged pillars having a diameter of 20 $\mu$m at intervals of 20 $\mu$m. The patterns may be fabricated so as to have the same height of 30 $\mu$m.

In this case, as shown in Fig. 2B, the PDMS sample 201, which is a polymer material with a linear micropillar array, is fixed onto a jig 207 at a predetermined tilt angle ($\alpha$), such that the ion beams 103 are irradiated at a predetermined angle onto the surface of the PDMS sample 201 from the ion beam deposition apparatus. That is, the PDMS sample 201, which is a polymer material with a linear micropillar array, is disposed such that a predetermined angle is made between the PDMS sample 201 and the incident angle of the ion beams 103. A reference numeral 203 denotes a cathode to provide a bias voltage in the ion beam deposition apparatus. That is, Argon (Ar+) ion beam treatment using any one of the PECVD, PSII, filtered vacuum arc, atmospheric plasma treatment method and ion beam method is performed on the PDMS sample 201, which is a polymer material with a linear micropillar array. The ion beam treatment is performed for 10 minutes on the conditions that the voltage is at 400 V, and the degree of vacuum of the vacuum chamber 105 is 0.49 Pa.

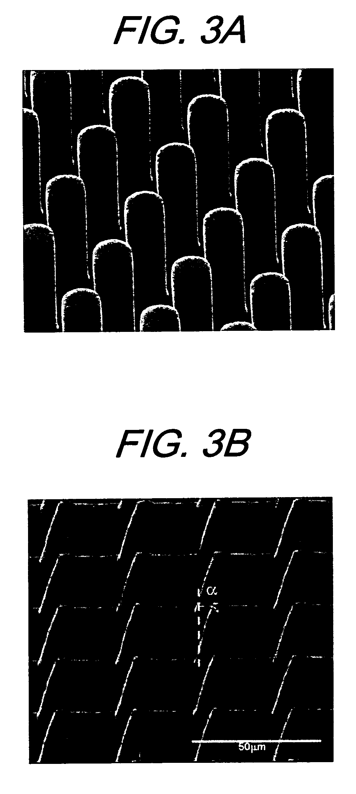

As described above, if the ion beam treatment using the PECVD method or the like is performed on the surface of the PDMS sample 201, which is a polymer material with a linear micropillar array, an upright linear micropillar array shown in Fig. 3A is deformed to a tilted micropillar array in one direction shown in Fig. 3B due to compressive residual stress by the tilt angle ($\alpha$), and wrinkles are formed.

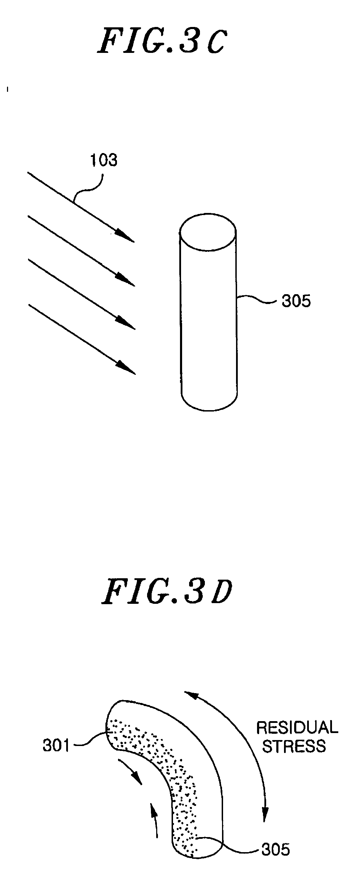

Specifically, if an ion beam or plasma is irradiated onto the surface of the PDMS sample 201, which is a polymer material with a micropillar array, the surface of the PDMS sample 201 is hardened about 100 times, and wrinkles are generated due to compressive residual stress. In other words, as shown in Figs. 3C and 3D, the surface of a micropillar 305 which is directly influenced by the ion beams undergoes stress more than the opposing surface of the micropillar, causing compressive stress. Then, wrinkles 301 are generated, and the surface of the micropillar 305 tends to be contracted and shortened. Therefore, as shown in Fig. 3D, while wrinkles 301 are generated on the surface of the micropillar 305 where residual stress is produced, no wrinkles are generated on the opposing surface of the micropillar 305 where ion beam or plasma does not reach owing to shadowing effect. As a result, the surface of the micropillar 305 is contracted, and thus the micropillar 305 is tilted in a direction in which the ion beams is irradiated.

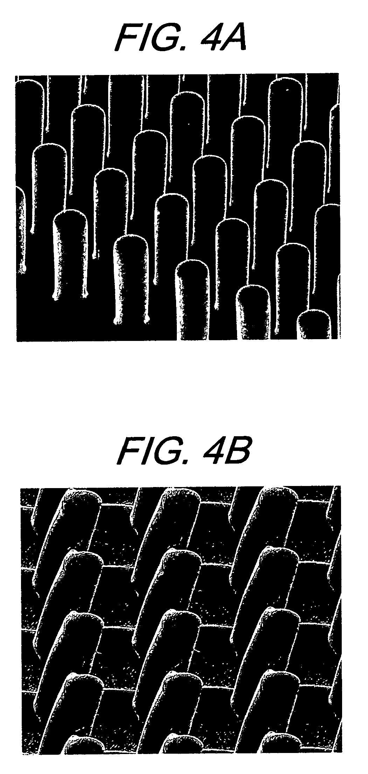

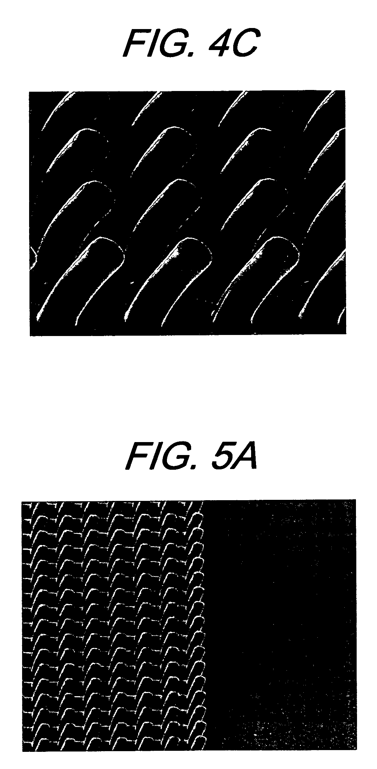

Fig. 4A shows an SEM image of a linear micropillar array before ion beam treatment is performed. Fig. 4B shows an SEM image of a tilted micropillar array, which is formed with an incident angle for ion beam treatment tilted at $\alpha$=20°, according to the embodiment of the present invention. Fig. 4C shows an SEM image of a tilted micropillar array, which is formed with an incident angle for ion beam treatment tilted at $\alpha$=40°, according to the embodiment of the present invention.

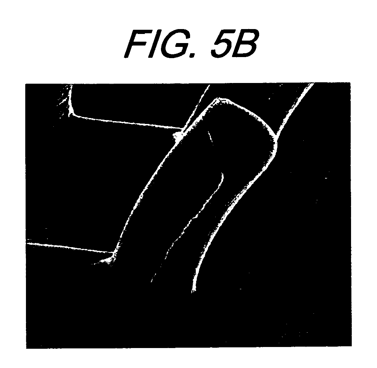

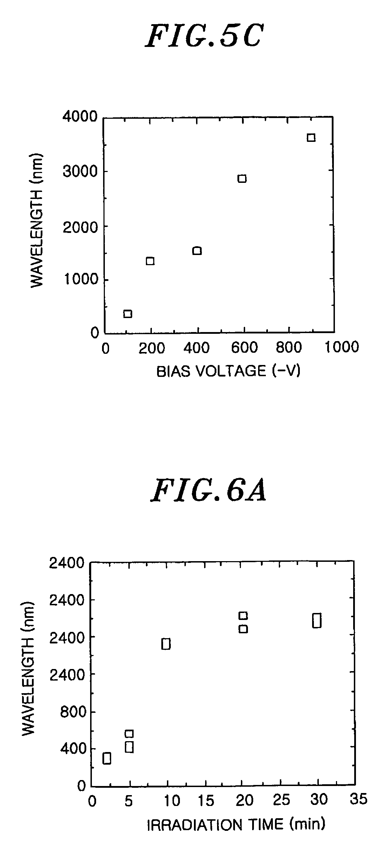

Figs. 5A and 5B show an SEM image where wrinkles are observed in a portion, in which no micropillar array is formed, due to a change in voltage according to the embodiment of the present invention. Fig. 5C is a graph showing a wrinkle wavelength.

The width and height of wrinkles 501, as can be seen in Figs. 5A and 5B, are closely associated with the ion beam energy for ion beam treatment. In particular, an increase in a bias voltage, which is the intensity of energy, causes an increase in the width of wrinkles in the polymer material. The wrinkles on the surface enable the micropillar array to be tilted.

Specifically, the reason why wrinkles are formed on the surface of the micropillar and the surface, on which no pillar array is formed, by ion beams for plasma treatment is that the surface of a soft polymer, such as PDMS, is hardened by the ion beams so as to form a skin layer, and the resultant skin layer and the existing polymer material are different in the elastic coefficient around 100 times. In this case, elastic energy caused by compressive stress is added, so nano-sized wrinkles are formed.

Assuming that the elastic coefficient of an existing soft polymer is $E_s$, and the elastic coefficient of the resultant skin layer having a thickness of h is $E_f$, a critical deformation for forming wrinkles is expressed by the following equation.

[Equation 1]

$$\varepsilon_c = 0.52 \left( E_s / E_f \right)^{2/3}$$

For Equation 1, $\varepsilon_c$ is a critical deformation, $E_s$ is the elastic coefficient of the existing soft polymer, and $E_f$ is the elastic coefficient of the resultant skin layer.

Referring to Equation 1, the critical deformation does not have to do with the thickness of the skin layer. An increase in the calculated critical deformation causes an increase in the amplitude of the wrinkle pattern having a sine wave shape. This is expressed by the following equation.

[Equation 2]

$$A / h = \sqrt{\left( \varepsilon / \varepsilon_c \right)^2 - 1}$$

For Equation 2, E is a deformation rate externally exerted.

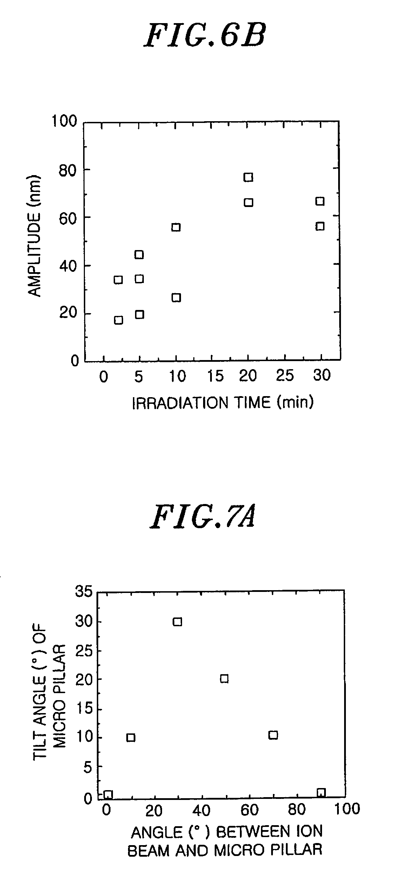

In this case, it can be seen that the deformation rate applied to the surface of the PDMS sample and the surface of the micropillar array linearly increases with the increase in the amplitude of the wrinkle pattern. That is, as shown in the graph of Fig. 6A showing a change in wavelength depending on the irradiation time and the graph of Fig. 6B showing a change in amplitude with the irradiation time when the bias voltage is constant at -400 V, an increase in the irradiation time of the ion beam for the ion beam treatment onto the surface of the polymer causes an increase in the amplitude of the wrinkle pattern, thus causing an increase in the applied deformation rate. For this reason, the applied deformation rate can be quantitatively measured by measuring the amplitude of wrinkles to be formed. Therefore, an increase in the deformation rate of the micropillar array causes an increase in the amplitude of the wrinkle pattern, so the micropillar array is gradually tilted toward the progress direction of plasma.

The wrinkle wavelength λ is in proportion to the thickness and has to do with the difference of elastic moduli between the ion beam induced skin (f) and PDMS (s). This is expressed by the following equation.

[Equation 3]

$$\lambda / h \approx \alpha \left( E_f / E_s \right)^{1/3}$$

For Equation 3, the relationship α=4.36 is established under planar deformation condition.

As described above, Equations 1 to 3 are appropriately used so as to analyze the skin and the wrinkles due to ion beams and plasma.

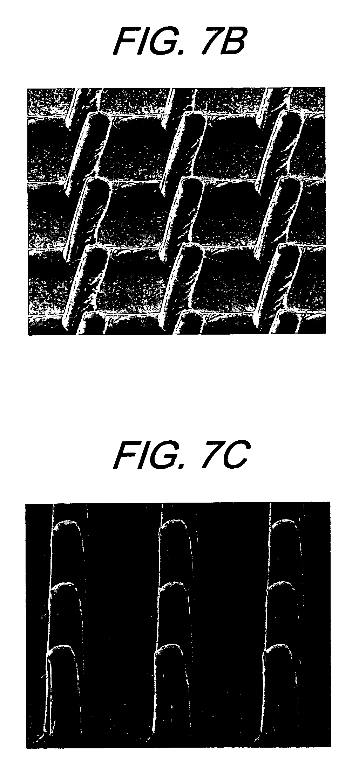

Fig. 7A is a graph showing a tilt angle of a micropillar to an angle between a micropillar array and an ion beam for ion beam treatment according to the embodiment of the present invention. Fig. 7B shows an SEM image of a micropillar tilted at an angle α=40° according to the embodiment of the present invention. Fig. 7C shows an SEM image of a micropillar tilted at an angle α=80° according to the embodiment of the present invention.

In this case, the width, height, and interval of each pillar in the micropillar array are 10 μm, 30 μm, and 20 μm, respectively, and the total ion beam treatment time is 60 minutes under the energy condition that the anode voltage is 1500 V and the bias voltage is -600 V.

In this case, it can be seen that, as shown in Fig. 6A, if the angle of the micropillar array is α=0° or α=90°, the micropillar array is not easily tilted, and at the angle α=40°, the micropillar array is most tilted. This may be changed with the changes in the position of the micropillar array, the ion beam treatment time, and the energy condition.

According to the embodiment of the present invention, the tilted micropillar array can be formed by adjusting the incident angle of the ion beam for the ion beam treatment. Therefore, the present invention can be applied in manufacturing an adhesive material with dry self-cleaning, a micro robot which can go up the wall, a wafer aligner for a semiconductor manufacturing line, and the like.

While the present invention has been shown and described with respect to the embodiment, it will be understood by those skilled in the art that various changes and modifications may be made without departing from the scope of the present invention as defined in the following claims.

**Claims**

**1.** A polymer microstructure comprising:

a polymer material with a linear micropillar array formed thereon,

wherein the linear micropillar array is subjected to either thin film coating or sputtering of a gas and metal/non-metal material while adjusting an incident angle of an ion beam for ion beam treatment over the entire top surface of the linear micropillar array, to make the micropillar array be tilted, and **characterised in that** a portion of the entire top surface whereon the ion beam has been directly irradiated has wrinkles due to compressive stress caused by the ion beam.

2. The polymer microstructure of claim 1, wherein the linear micropillar array is formed in the shape of one of a pillar, a dot, a hole, and a wall having a convex shape.

3. The polymer microstructure of claim 1, wherein the ion beam treatment is performed by one of PECVD (plasma-enhanced chemical vapor deposition) method, PSII (plasma source ion implantation), filtered vacuum arc, atmospheric plasma treatment method and ion beam method.

4. The polymer microstructure of claim 1, wherein the incident angle is an angle between an ion beam acceleration direction in the ion beam treatment and the polymer material.

5. The polymer microstructure of claim 1, wherein the ion beam is one of argon gas, oxygen, $N_2$ (nitrogen), Xe (xenon), He (helium) and $CF_4$ (tetrafluoromethane).

6. The polymer microstructure of claim 1, wherein the ion beam for the ion beam treatment is irradiated obliquely in a predetermined direction so as to tilt the micropillar array in a predetermined direction.

7. The polymer microstructure of claim 1, wherein the angle of the tilted micropillar array is adjusted by controlled at least one of the incident angle, the irradiation time, and the magnitude of acceleration voltage of the ion beam for the ion beam treatment.

8. The polymer microstructure of claim 7, wherein the irradiation time of the ion beam for the ion beam treatment is controlled so as to adjust the asymmetric sectional shape of the tilted micropillar array.

9. The polymer microstructure of claim 7, wherein the acceleration voltage of the ion beam is in the range of 100 V to 100.0 kV.

10. The polymer microstructure of claim 1, wherein the incident angle of the ion beam for the ion beam treatment is equal to or more than 0° and equal to or less than 90°.

11. The polymer microstructure of claim 1, wherein the tilted micropillar array has a width in the range of 1 nm to 10 mm and a length in the range of 1 nm to 10 mm.

12. A method of fabricating a polymer microstructure with a tilted micropillar array, the method comprising:

forming a polymer sample with a linear micropillar array; and
fixing the polymer sample onto a jig having a predetermined tilt angle within a chamber,
the method being **characterized by** performing ion beam treatment on the top surface of the linear micropillar array to form the tilted micropillar array.

13. The method of claim 12, wherein the ion beam treatment is performed by one of a PECVD (plasma-enhanced chemical vapor deposition) method, PSII (plasma source ion implantation), filtered vacuum arc, atmospheric plasma treatment method and ion beam method.

14. The method of claim 12, wherein the ion beam is one of argon gas, oxygen, $N_2$ (nitrogen), Xe (xenon), He (helium) and $CF_4$ (tetrafluoromethane).

15. The method of claim 12, wherein the tilt angle of the tilted micropillar array is adjusted by controlling at least one of the incident angle, the irradiation time, the magnitude of acceleration voltage of the ion beam for the ion beam treatment.

16. The method of claim 12, wherein the pressure in the chamber for the ion beam treatment is in a range of $1.0 \times 10^{-7}$ Pa to $2.75 \times 10^{-3}$ Pa.

17. The method of claim 15, wherein the acceleration voltage of the ion beam for the ion beam treatment is in a range of 100 V to 100.0 kV.

18. The method of claim 15, wherein the incident angle of the ion beam for the ion beam treatment is equal to or more than 0° and equal to or less than 90°.

19. The method of claim 12, wherein the tilted micropillar array has a width in the range of 1 nm to 10 mm and a length in the range of 1 nm to 10 mm.

20. The method of claim 12, wherein a material for the polymer sample includes one of PDMS (PolydiMethyl Siloxane), polycarbonate (PC), polyimide (PI), polyethylene (PE), poly methyl methacrylate (PMMA), polystyrene (PS), poly lactic-co-glycolic acid (PLGA), hydrogel, polyethylene terephthalate (PET) and silicone rubber.

**Patentansprüche**

1.  Polymermikrostruktur, umfassend:

    ein Polymermaterial mit einer darauf ausgebildeten geraden Mikrosäulenanordnung,
    wobei die gerade Mikrosäulenanordnung entweder einer Dünnfilmbeschichtung oder einem Sputterverfahren mit einem Gas und metallischem/nichtmetallischem Material unterziehbar ist, während zur Ausbildung einer Neigung der Mikrosäulenanordnung ein Einfallswinkel eines Ionenstrahls für eine Ionenstrahlbehandlung über die gesamte Oberfläche der geraden Mikrosäulenanordnung anpassbar ist, und
    **dadurch gekennzeichnet,**
    **dass** ein Teil der direkt mit dem Ionenstrahl bestrahlten gesamten Oberfläche aufgrund von durch den Ionenstrahl verursachten Druckspannungen Falten aufweist.

2.  Polymermikrostruktur nach Anspruch 1, wobei die gerade Mikrosäulenanordnung säulenförmig, punktförmig, lochförmig oder in Form einer konvexen Wand ausgebildet ist.

3.  Polymermikrostruktur nach Anspruch 1, wobei die Ionenstrahlbehandlung nach einem PECVD-Verfahren (plasmaunterstützte chemischen Gasphasenabscheidung), durch PSII (Plasmaquellen-Ionenimplantation), durch einen gefilterten Vakuumlichtbogen, nach einem Atmosphärendruckplasmabehandlungsverfahren oder einem Ionenstrahlverfahren erfolgt.

4.  Polymermikrostruktur nach Anspruch 1, wobei der Einfallswinkel ein Winkel zwischen einer Ionenstrahlbeschleunigungsrichtung bei der Ionenstrahlbehandlung und dem Polymermaterial ist.

5.  Polymermikrostruktur nach Anspruch 1, wobei es sich bei dem Ionenstrahl um Argongas, Sauerstoff, $N_2$ (Stickstoff), Xe (Xenon), He (Helium) oder $CF_4$ (Tetrafluormethan) handelt.

6.  Polymermikrostruktur nach Anspruch 1, wobei der Ionenstrahl für die Ionenstrahlbehandlung zum Neigen der Mikrosäulenanordnung in einer vorbestimmten Richtung schräg in einer vorbestimmten Richtung ausgestrahlt wird.

7.  Polymermikrostruktur nach Anspruch 1, wobei der Winkel der geneigten Mikrosäulenstruktur durch Steuern des Einfallswinkels, der Bestrahlungszeit und/oder der Größenordnung der Beschleunigungsspannung des Ionenstrahls für die Ionenstrahlbehandlung anpassbar ist.

8.  Polymermikrostruktur nach Anspruch 7, wobei die Bestrahlungszeit des Ionenstrahls für die Ionenstrahlbehandlung zum Anpassen des asymmetrischen Querschnitts der geneigten Mikrosäulenanordnung steuerbar ist.

9.  Polymermikrostruktur nach Anspruch 7, wobei die Beschleunigungsspannung des Ionenstrahls im Bereich von 100 V bis 100,0 kV liegt.

10. Polymermikrostruktur nach Anspruch 1, wobei der Einfallswinkel des Ionenstrahls für die Ionenstrahlbehandlung größer oder gleich 0° und kleiner oder gleich 90° ist.

11. Polymermikrostruktur nach Anspruch 1, wobei die geneigte Mikrosäulenanordnung eine Breite im Bereich von 1 nm bis 10 mm und eine Länge im Bereich von 1 nm bis 10 mm aufweist.

12. Verfahren zur Herstellung einer Polymermikrostruktur mit einer geneigten Mikrosäulenanordnung, wobei das Verfahren folgende Schritte umfasst:

    Bilden eines Polymermusters mit einer geraden Mikrosäulenanordnung; und
    Befestigen des Polymermusters auf einer einen vorbestimmten Neigungswinkel aufweisenden Schablone innerhalb einer Kammer,
    wobei das Verfahren **gekennzeichnet ist durch**
    das Durchführen einer Ionenstrahlbehandlung auf der Oberfläche der geraden Mikrosäulenanordnung zum Ausbilden der geneigten Mikrosäulenanordnung.

13. Verfahren nach Anspruch 12, wobei die Ionenstrahlbehandlung nach einem PECVD-Verfahren (plasmaunterstützte chemischen Gasphasenabscheidung), durch PSII (Plasmaquellen-Ionenimplantation), durch einen gefilterten Vakuumlichtbogen, nach einem Atmosphärendruckplasmabehandlungsverfahren oder einem Ionenstrahlverfahren erfolgt.

14. Verfahren nach Anspruch 12, wobei es sich bei dem Ionenstrahl um Argongas, Sauerstoff, $N_2$ (Stickstoff), Xe (Xenon), He (Helium) oder $CF_4$ (Tetrafluormethan) handelt.

15. Verfahren nach Anspruch 12, wobei der Neigungswinkel der geneigten Mikrosäulenanordnung durch Steuern des Einfallswinkels, der Bestrahlungszeit und/oder der Größenordnung der Beschleunigungsspannung des Ionenstrahls für die Ionenstrahlbehandlung angepasst wird.

16. Verfahren nach Anspruch 12, wobei der Druck in der Kammer für die Ionenstrahlbehandlung in einem Bereich von 1,0 x 10$^{-7}$ Pa bis 2,75 x 10$^{-3}$ Pa liegt.

17. Verfahren nach Anspruch 15, wobei die Beschleunigungsspannung des Ionenstrahls für die Ionenstrahlbehandlung in einem Bereich von 100 V bis 100,0 kV liegt.

18. Verfahren nach Anspruch 15, wobei der Einfallswinkel des Ionenstrahls für die Ionenstrahlbehandlung größer oder gleich 0° und kleiner oder gleich 90° ist.

19. Verfahren nach Anspruch 12, wobei die geneigte Mikrosäulenanordnung eine Breite im Bereich von 1 nm bis 10 mm und eine Länge im Bereich von 1 nm bis 10 mm aufweist.

20. Verfahren nach Anspruch 12, wobei ein Material für das Polymermuster PDMS (Polydimethylsiloxan), Polycarbonat (PC), Polyimid (PI), Polyethylen (PE), Polymethylmethacrylat (PMMA), Polystyrol (PS), Polylactid-co-Glycolid (PLGA), Hydrogel, Polyethylenterephthalat (PET) oder Silikonkautschuk umfasst.

**Revendications**

1. Microstructure polymère comprenant :

un matériau polymère comportant un ensemble de micropiliers linéaire formé sur celui-ci, l'ensemble de micropiliers linéaire étant soumis soit à un revêtement à couche mince ou à une pulvérisation d'un gaz et d'un matériau métallique/non métallique tout en ajustant un angle incident d'un faisceau d'ions pour un traitement par faisceau d'ions sur toute la surface supérieure de l'ensemble de micropiliers linéaire afin de faire incliner l'ensemble de micropiliers, et **caractérisée en ce qu'**une partie de toute la surface supérieure qui a été directement irradiée par le faisceau d'ions présente des rides en raison d'une contrainte de compression causée par le faisceau d'ions.

2. Microstructure polymère selon la revendication 1, dans laquelle l'ensemble de micropiliers linéaire est formé sous la forme d'un pilier, d'un point, d'un trou ou d'un mur ayant une forme convexe.

3. Microstructure polymère selon la revendication 1, dans laquelle le traitement par faisceau d'ions est effectué par un procédé PECVD (dépôt chimique en phase vapeur assisté par plasma), PSII (implantation ionique par source de plasma), un arc à vide filtré, un procédé de traitement par plasma atmosphérique ou un procédé de faisceau d'ions.

4. Microstructure polymère selon la revendication 1, dans laquelle l'angle incident est un angle entre une direction d'accélération de faisceau d'ions dans le traitement par faisceau d'ions et le matériau polymère.

5. Microstructure polymère selon la revendication 1, dans laquelle le faisceau d'ions est le gaz argon, l'oxygène, N$_2$ (le nitrogène), Xe (le xénon), He (l'hélium) ou CF$_4$ (le tétrafluorure de carbone).

6. Microstructure polymère selon la revendication 1, dans laquelle le faisceau d'ions pour le traitement par faisceau d'ions est émis obliquement dans une direction prédéterminée afin d'incliner l'ensemble de micropiliers dans une direction prédéterminée.

7. Microstructure polymère selon la revendication 1, dans laquelle l'angle d'inclinaison de l'ensemble de micropiliers incliné est ajusté en contrôlant l'angle incident, le temps d'irradiation et/ou la magnitude de la tension d'accélération du faisceau d'ions pour le traitement par faisceau d'ions.

8. Microstructure polymère selon la revendication 7, dans laquelle le temps d'irradiation du faisceau d'ions pour le traitement par faisceau d'ions est contrôlé afin d'ajuster la forme sectionnelle asymétrique de l'ensemble de micropiliers incliné.

9. Microstructure polymère selon la revendication 7, dans laquelle la tension d'accélération du faisceau d'ions est dans la gamme de 100 V à 100,0 kV.

10. Microstructure polymère selon la revendication 1, dans laquelle l'angle incident du faisceau d'ions pour le traitement par faisceau d'ions est égal ou supérieur à 0° et égal ou inférieur à 90°.

11. Microstructure polymère selon la revendication 1, dans laquelle l'ensemble de micropiliers incliné a une largeur dans la gamme de 1 nm à 10 mm et une longueur dans la gamme de 1 nm à 10 mm.

12. Procédé de fabrication d'une microstructure polymère comportant un ensemble de micropiliers incliné, le procédé comprenant les étapes de :

former un échantillon polymère comportant un ensemble de micropiliers linéaire ; et fixer l'échantillon polymère sur un gabarit ayant un angle d'inclinaison prédéterminé dans une chambre, le procédé étant **caractérisé en ce qu'**un traitement par faisceau d'ions est effectué sur la surface supérieure de l'ensemble de micropiliers linéaire afin de former l'ensemble de micropiliers incliné.

**13.** Procédé selon la revendication 12, dans lequel le traitement par faisceau d'ions est effectué par un procédé PECVD (dépôt chimique en phase vapeur assisté par plasma), PSII (implantation ionique par source de plasma), un arc à vide filtré, un procédé de traitement par plasma atmosphérique ou un procédé de faisceau d'ions.

**14.** Procédé selon la revendication 12, dans lequel le faisceau d'ions est le gaz argon, l'oxygène, $N_2$ (le nitrogène), Xe (le xénon), He (l'hélium) ou $CF_4$ (le tétrafluorure de carbone).

**15.** Procédé selon la revendication 12, dans lequel l'angle d'inclinaison de l'ensemble de micropiliers incliné est ajusté en contrôlant l'angle incident, le temps d'irradiation et/ou la magnitude de la tension d'accélération du faisceau d'ions pour le traitement par faisceau d'ions.

**16.** Procédé selon la revendication 12, dans lequel la pression dans la chambre pour le traitement par faisceau d'ions est dans une gamme de $1,0 \times 10^{-7}$ Pa à $2,75 \times 10^{-3}$ Pa.

**17.** Procédé selon la revendication 15, dans lequel la tension d'accélération du faisceau d'ions pour le traitement par faisceau d'ions est dans une gamme de 100 V à 100,0 kV.

**18.** Procédé selon la revendication 15, dans lequel l'angle incident du faisceau d'ions pour le traitement par faisceau d'ions est égal ou supérieur à 0° et égal ou inférieur à 90°.

**19.** Procédé selon la revendication 12, dans lequel l'ensemble de micropiliers incliné a une largeur dans la gamme de 1 nm à 10 mm et une longueur dans la gamme de 1 nm à 10 mm.

**20.** Procédé selon la revendication 12, dans lequel un matériau pour l'échantillon polymère inclut le PDMS (polydiméthylsiloxane), le polycarbonate (PC), le polyimide (PI), le polyéthylène (PE), le polyméthacrylate de méthyle (PMMA), le polystyrène (PS), le polyacide lactique-co-glycolique (PLGA), l'hydrogel, le polytéréphtalate d'éthylène (PET) ou le caoutchouc de silicone.

# FIG.1A

## FIG. 1B

# FIG.2A

# FIG.2B

## FIG. 3A

## FIG. 3B

# FIG.3C

# FIG.3D

## FIG. 4A

## FIG. 4B

## FIG. 4C

## FIG. 5A

FIG. 5B

## FIG.5C

## FIG.6A

## FIG.6B

## FIG.7A

FIG. 7B

FIG. 7C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **S. REDDY et al.** *Advanced Materials,* 2007, vol. 19, 3833-3837